(19) **Europäisches Patentamt**

**European Patent Office**

**Office européen des brevets**

(11) **EP 1 562 033 B1**

(12) **EUROPEAN PATENT SPECIFICATION**

(45) Date of publication and mention
of the grant of the patent:
**06.09.2006 Bulletin 2006/36**

(51) Int Cl.:
***G01N 3/00*** (2006.01)

(21) Application number: **04405049.0**

(22) Date of filing: **27.01.2004**

(54) **Estimation of an irreversible ageing behaviour**

Abschätzung eines irreversiblen Alterungsprozesses

Estimation d'un comportement de vieillissement irréversible

(84) Designated Contracting States:
**AT BE BG CH CY CZ DE DK EE ES FI FR GB GR HU IE IT LI LU MC NL PT RO SE SI SK TR**

(43) Date of publication of application:
**10.08.2005 Bulletin 2005/32**

(73) Proprietor: **ABB RESEARCH LTD.**
**8050 Zürich (CH)**

(72) Inventor: **Poncet, Andreas**
**8049 Zürich (CH)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(56) References cited:
**EP-A- 0 392 471        EP-A- 1 363 248**
**WO-A-03/054521        US-A- 4 336 595**
**US-A- 4 836 029        US-A1- 2001 053 965**

**Description**

FIELD OF THE INVENTION

The invention relates to the field of irreversible ageing or material fatigue phenomena in mechanical systems, and in particular to the crack growth in components subject to considerable mechanical load such as the blades of a gas turbine or compressor.

BACKGROUND OF THE INVENTION

Existing physical fatigue sensors allow a real-time observation of the fatigue behaviour of a monitored system, but generally have two major drawbacks. Firstly, the monitored system must allow the installation of a physical fatigue sensor. Its installation however is often prohibited by limited access. Secondly, this type of sensor is typically very expensive. A possibility to predict a lifetime of an observed system without physical sensors is based on fatigue crack analysis, which has become an essential tool for life prediction and maintenance of machinery components that are subjected to cyclic stresses.

Ageing processes such as fatigue and creep in materials subject to mechanical stress or load are complicated processes and difficult to describe or model accurately. Ageing modelling attempts have typically been based on a standard deterministic approach. Experimental data however, indubitably show that the fatigue process in real materials involves important variability, depending on material properties, type of loading, and environmental conditions. Even in tightly controlled laboratory conditions under deterministic cyclic load, data still show considerable statistical dispersion. In addition, material fatigue, in the form of crack propagation, is not a smooth process, but sudden increases and decreases in the growth rate suggest that a crack is passing through regions with different properties. In view of these difficulties it is not surprising that existing lifetime predicting products are often regarded as highly speculative or overly conservative.

In a general ageing process, an accumulation of fatigue or a size of some crack in a material is represented by a certain system quantity $a(t)$ which increases monotonically with the operation "time" $t$. The latter may correspond to a number of cycles. A critical age, amount or size $a_c$ is given such that $a = a_c$ means that the nominal operational lifetime has been reached.

Ageing or fatigue dynamics are typically modelled by an equation of the form

$$\frac{da}{dt} = C \left( \phi(a,u) \right)^m \qquad\qquad (\text{eq. 1})$$

where $u$ is the applied stress or load, while $C$ and $m$ are material constants and the function $\phi$ is called the stress intensity factor range and quantifies the effect of the applied stress. By way of example, the stress intensity factor range may take the form

$$\phi(a, \Delta S) = \Delta S \sqrt{\frac{\pi a}{\cos(\pi a / b)}}$$

where $\Delta S$ is the load amplitude and $a = b/2$ represents the rupture of the specimen. The solution $a(t)$ to the differential equation (eq.1) represents the deterministic ageing evolution.

In a stochastic approach on the other hand, an inherent randomness or dispersion of the process is taken into account. In this framework, the aforementioned age, amount or size in the material subject to a varying load is represented by a certain non-decreasing stochastic system quantity $A(t)$. A natural extension of the above deterministic model is to assume that the growth rate is perturbed by a stochastic process $V(t)$, i.e. by extending the model to

$$\frac{dA}{dt} = C \cdot \left( \phi(A(t), u(t)) \right)^m \cdot V(t) \qquad\qquad (\text{eq. 2})$$

A probability distribution or probability density function $p$ describes the fatigue process, and the probability $p$ $(A(t) > a_c)$ determines the consumed lifetime at time $t$ in place of the aforementioned deterministic system quantity $a(t)$. However, calculating a time-dependent probability distribution by numerically solving the above stochastic differential equation is computationally rather complex.

In the article "A stochastic model of fatigue crack propagation under variable-amplitude loading" by A. Ray et al, (*Engineering Fracture Mechanics,* vol. 62, pp. 477-493, 1999), a model incorporating additional stochastic parameters and a multiplicative noise process to represent uncertainties in the material microstructure of center-cracked specimen is presented. A probability distribution is obtained in closed form, thus avoiding computationally intensive numerical solution of a nonlinear stochastic difference equation. A restrictive assumption in the model concerns the fact that the crack growth process has no memory, i.e. is uncorrelated in time and space. Hence, the tip of a crack, while propagating to a new region, looses the memory of the propagation characteristics of the former region.

DESCRIPTION OF THE INVENTION

It is therefore an objective of the invention to assess and track the ageing behaviour of a system, and in particular the crack growth in components subject to considerable mechanical load, at increased speed and/or reduced computational complexity. These objectives are achieved by a method of estimating an irreversible ageing behaviour according to claim 1. Further preferred embodiments are evident from the dependent patent claims.

According to the invention, a probability distribution $p_{A|T}(\cdot|t)$ for a system quantity representing an ageing phenomena such as a crack size is linked to a deterministic trajectory $a$ of the same system quantity and recursively updated. The deterministic trajectory $a$ is obtained by integrating a deterministic ageing differential equation based on a realistic initial value $a_0$ of the system quantity. The probability distribution $p_{A|T}$, which is subject to some initial distribution $p_{A|T}(\cdot|0)$ (at $t$=0), represents an approximation to an unknown physical distribution of the ageing system quantity at a particular time $t > 0$. Preferably, the recursive updating process takes place at regularly spaced discrete times $t = k \Delta t$ (k = 1, 2, 3, ...).

In a first preferred variant of the invention, the estimation of a deterministic evolution of the system quantity $a$ is either an analytical solution in closed form $a(t)$, or a numerical solution in the form of a sequence $\{a_k\}$, to a deterministic differential equation for the system quantity such as

$$\frac{da}{dt} = C\left(\phi(a,u)\right)^m \qquad\qquad (\text{eq. } 1)$$

sometimes referred to in the literature as the Paris-Erdogan equation, wherein $u(t)$ is the given mechanical load applied to the system. The load can be generally time-dependent (e.g. it may correspond to the start-up or shut-down operations of a power plant) and is generally known from the past history of the system. Alternatively, the load may be predicted for a future time span on the basis of a predetermined system operation schedule.

In a second preferred variant of the invention, the recursive estimation of the probability distribution corresponding to the discrete-time dynamics of the ageing system quantity, e.g. crack growth, is subject to monotonicity constraints, in order to impose the *irreversibility* of ageing in the estimation model.

In a third preferred embodiment, the approximating probability distribution is chosen to have an appropriate parametric form. Compared to numerically integrating a partial differential equation, updating recursively only a few parameters of the distribution considerably simplifies the procedure. Since empirical results in the literature indicate that e.g. a crack size distribution is quite skewed, a lognormal distribution with parameters $\eta$ and $v > 0$ is appropriate, i.e.

$$p_X(x) = \frac{1}{x} \exp\left[-\frac{1}{2}\left(\frac{\log x - \eta}{v}\right)^2\right] / \sqrt{2\pi}\, v \qquad\qquad x \geq 0$$

In a fourth preferred variant of the invention, material inhomogeneity is represented by a randomization of the dynamics of the ageing system quantity (e.g. crack growth) via the introduction of a stochastic process. This is done e.g. by modifying the deterministic equation (eq.1) by multiplicatively adding a stochastic term which represents all randomness factors. The stochastic term preferably involves a non-white noise, thus introducing a memory effect into the ageing dynamics. In addition, the computational complexity is limited by reverting to a parametric representation of said additional stochastic term.

From the probability distribution, any probabilistic statement about the actual state of fatigue of the system can be made. For instance given the critical value of the ageing system quantity (e.g. critical crack size) defined by the operator of the system, the invention returns the probability level for said critical value being exceeded or nominal lifetime being reached at a given time. The inventive method thus becomes a virtual sensor of ageing or material fatigue. On the other hand, provided the load schedule in the future is known, the time at which a predetermined probability level will be reached may be deduced.

BRIEF DESCRIPTION OF THE DRAWINGS

The subject matter of the invention will be explained in more detail in the following text with reference to preferred exemplary embodiments illustrated in the attached drawings, of which:

Fig.1    schematically shows a flow chart according to the invention,
Fig.2    is a visualisation of the stochastic or noise term for four different parameters, and
Fig.3    depicts a comparison between the invention and a Monte Carlo experiment.

The reference symbols used in the drawings, and their meanings, are listed in summary form in the list of reference symbols. In principle, identical parts are provided with the same reference symbols in the figures.

DETAILED DESCRIPTION OF PREFERRED EMBODIMENTS

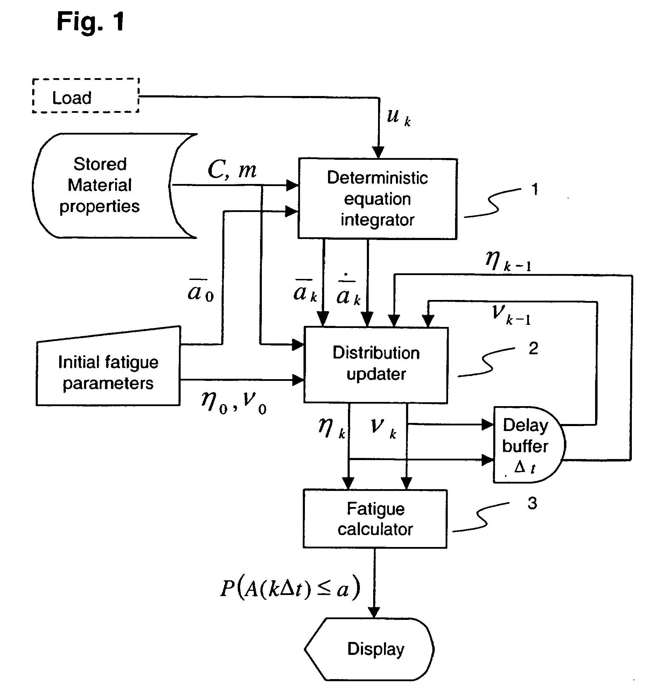

Fig.1 schematically shows the structure of the process of estimating an irreversible ageing behaviour in a system according to a basic embodiment of the invention. The generally time-dependent values of the load applied to the system, in the form of a sequence of load values $\{u_k\}$, are fed into a standard differential equation solver (1). The latter integrates a deterministic differential equation such as (eq.1) above for a system quantity $a(t)$ with time or cycle step $\Delta t$, yielding a sequence $\{a_k\}$. The equation solver (1) is also provided with some material properties or constants $(m, C)$ and with the initial value $a_0$. Instead of numerically solving the differential equation (eq.1), an analytical solution $a(t)$ in closed form may be obtainable in some cases.

At step $k$, i.e. at time $t = k\,\Delta t$, the value $a_k$ of the integrated system quantity and its derivative $\dot{a}_k$ are fed to a distribution updater (2) for updating a probability distribution $p_{A|T}(\cdot|t)$ of the system quantity at time $t$. The recursive updating procedure according to the invention consists in evaluating the probability distribution of the system quantity $A$ for each $t$, i.e., $p_{A|T}(\cdot|t)$, based on the distribution at the previous time step and the deterministic evolution $\{a_k\}$ or $a(t)$ and its rate of change as set out above. The introduction of the initial condition $p_{A|T}(\cdot|0) = p_{A_0}(\cdot)$, i.e. the randomization of the initial condition $a_0$, allows to account for the scatter in the initial state of the ageing process (e.g. crack growth). From the updated probability distribution, any probabilistic statement about the state of ageing of the system can be extracted by a fatigue calculator (3).

If an initial probability distribution $p_{A|T}(\cdot|0)$ at time $k = 0$ is characterized by one or several parameters $(\eta_0, \nu_0)$, these parameters are recursively updated at each step $t = k\,\Delta t$. The recursion thus involves the previous parameter values $\eta_{k-1}$, $\nu_{k-1}$, as well as the deterministic solution $\{a_k\}$ of the system quantity. An appropriate parametric form of the probability distribution which quite well approximates empirical data of crack growth found in the literature and indicating that the distribution of the ageing quantity is rather asymmetric (skewed) is a lognormal distribution of the form

$$p_{A|T}(a \mid k\Delta t) = \frac{1}{a}\exp\left[-\frac{1}{2}\left(\frac{\log a - \eta_k}{\nu_k}\right)^2\right] / \sqrt{2\pi}\,\nu_k \qquad a \geq 0,$$

with the parameters $\eta$ and $\nu > 0$. For small values of $\eta, \nu$, the density is nearly symmetric. The larger $\eta$ and $\nu$, the more skewed is the density.

However, sample curves of $a(t)$ generally are "too smooth" and do not cross each other, i.e. the relative length of two arbitrary cracks will never be inverted. Hence the introduction of the initial distribution $p_{A|T}(\cdot \mid 0)$ alone is unable to account for the variability of successive crack growth from specimen to specimen as observed in real physical samples.

A more general randomization, which at the same time is physically more realistic, consists in introducing an appropriate stochastic process into the original deterministic equation. This leads to the stochastic model (randomized Paris-Erdogan equation)

$$\frac{dA}{dt} = C \cdot \left( \phi(A(t), u(t)) \right)^m \cdot V(t), \qquad\qquad \text{(eq.2)}$$

where $V(\cdot)$ is a non-negative stochastic process which represents the combined effects of the random factors responsible of the scatter in crack growth rate. The multiplicative (rather than additive) entry of $V(.)$ in the growth rate is justified by a better description of the effect of *relative* variations in stress ratio, which often are assumed to occur multiplicatively. The product $CV(\cdot)$ can also be viewed as a time-varying material coefficient. For the sake of simplicity, $C,m$ will be considered as given constants for the time being, although the model could easily be extended to incorporate any uncertainty in $C,m$. Before elaborating on the integration of the stochastic extension into the inventive recursive model, the signification of the stochastic process term $V(\cdot)$ is presented in the following.

In order to imitate a "memory" phenomenon of the material, a correlation must be introduced in the stochastic process. A simple coloured (i.e. non-white) process to represent material inhomogeneity is of the form

$$V(t) = \gamma \exp(Z(t))$$
$$\frac{dZ}{dt} = (W(t) - Z(t))/\tau \qquad\qquad \text{(eq.3)}$$

where $W(\cdot)$ is a white noise of power density $\sigma^2$ and $\tau$ is a positive constant. The process $V(\cdot)$ is non-negative due to the exponential function in (eq.3). The constant $\gamma$ is such that $V(\cdot)$ has unit mean. The process $Z(\cdot)$ has the autocorrelation function $\sigma^2 \exp(-|t|/\tau)/2\tau$. Any (non-ideal) material can thus be characterized by two parameters, the "homogeneity scale" time constant $\tau$ and the "inhomogeneity magnitude" standard deviation $\sigma$.

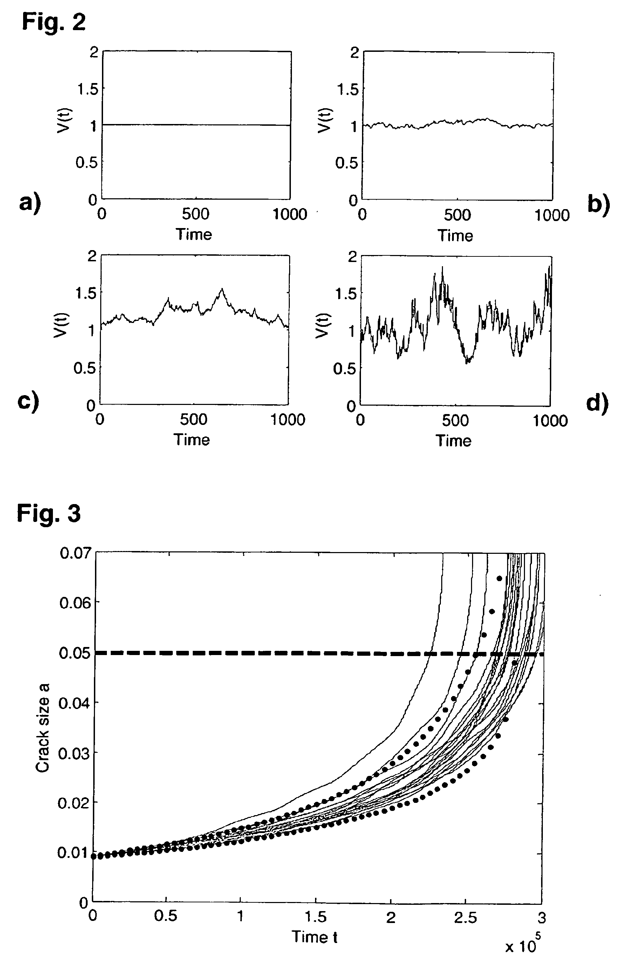

Fig.2 depicts four illustrative examples of the process $V(\cdot)$ represented as relative changes in crack growth rate. An ideal material (Fig.2a) corresponds to the limit $1/\tau \to 0$, $\sigma \to 0$ : Infinite homogeneity scale (i.e., correlation time) means that local scale and global scale properties are identical, whereas zero inhomogeneity magnitude means that the properties are (spatially) constant. Material imperfections are evident in Fig.2b ($\tau = \tau_1/30$, $\sigma = \sigma_1$), Fig.2c ($\tau = \tau_1$, $\sigma =10\sigma_1$) and Fig.2d ($\tau = \tau_1/30$, $\sigma =10\sigma_1$). The larger $\tau$, the larger the scale at which the material can be viewed as homogeneous (compare Fig.2c and Fig.2d). The smaller $\sigma$, the smaller the magnitude of the inhomogeneities (material variability) at a fixed scale (compare Fig.2b and Fig.2d). At times for which $0 < V < 1$, the growth process is slowed down (e.g., a "harder" part of material is encountered). Conversely, the growth is accelerated when $V > 1$.

In a preferred embodiment, the recursive updating of the probability distribution is based on the following mathematical analysis. (Eq.2) is rewritten as

$$\log\left( \frac{1}{A(t)} \frac{dA}{dt} \right) = m \log \phi(A(t), u(t)) - \log A(t) + \log CV(t).$$

Using a first-order Taylor expansion of the logarithm, and by letting $A(t) = e^{X(t)}$, this then becomes

$$\dot{X}(t) \approx \dot{\bar{x}} \left( m \log \phi(e^{X(t)}, u(t)) - X(t) + 1 + \log\left( CV(t)/\dot{\bar{x}} \right) \right)$$

for

$$\left| \log\left( \dot{X}(t)/\dot{\bar{x}} \right) \right| < 1,$$

where

$$\dot{\bar{x}} = \frac{1}{\bar{a}(t)} \frac{d\bar{a}}{dt}$$

and $a(t)$ is the solution of the deterministic differential equation (eq.1). Finally, a discretization with interval $\Delta t$ - during which the load signal is assumed to remain constant - leads to the approximation

$$\log A(t+\Delta t) \approx (1 - \dot{\bar{x}}\Delta t)\log A(t) + \dot{\bar{x}}\Delta t\, m\log\phi(A(t),u(t)) + \dot{\bar{x}}\Delta t\left(1 + \log\left(CV(t)/\dot{\bar{x}}\right)\right)$$

for

$$\dot{\bar{x}}\Delta t/e < \log A(t+\Delta t) - \log A(t) < \dot{\bar{x}}\Delta t\, e.$$

The distribution of the system quantity at regular times $t = k\,\Delta t$ ($k$ = 1, 2, 3, ...), under the assumption that the load $u$ does not vary during the interval $[k\Delta t, (k+1)\Delta t[$, is computed as follows (in order to facilitate readability of the formulas, the systematic reference to $\Delta t$ is omitted). The computation makes use of the deterministic solution $a_k$, its derivative $\dot{\bar{a}}_k = \frac{da}{dt}(k\Delta t)$ from (eq.1), and of the approximating parametric distribution introduced above. The irreversibility of ageing is imposed in the estimation model by the monotonicity constraints

$$\dot{\bar{a}}_k \geq 0,\ \eta_k > \eta_{k-1},\ v_k > v_{k-1},$$

as well as

$$P(A_k \leq a) < P(A_{k-1} \leq a) \qquad \forall\, a \geq 0,$$

which are automatically fulfilled by the computation described below. (Here $P(A_k \leq \cdot)$ is the cumulative distribution function at step $k$, i.e. the integral of $P_{A|T}(\cdot|k\Delta t)$.)

For each $k$, the distribution obtained is

$$p_{A|T}(a\,|\,k\Delta t) \approx \frac{1}{a}\exp\left[-\frac{1}{2}\left(\frac{\log a - \eta_k}{v_k}\right)^2\right]/\sqrt{2\pi}\,v_k \qquad\qquad a \geq 0 \qquad\qquad \text{(eq.4)}$$

where the parameters $\eta_k$, $v_k$ are computed by the following recursion:

$$v_k^2 = \min\Bigl\{\max(v_{k|k-1}^2, v_{k-1}^2),\ \min\bigl(2(\log\bar{a}_k - \eta_{k-1}),\ \bigl[(x_{\text{low}} - \eta_{k-1})/v_{k-1} + \sqrt{(x_{\text{low}} - \eta_{k-1})^2/v_{k-1}^2 + 2(\log\bar{a}_k - x_{\text{low}})}\bigr]^2\bigr)\Bigr\} \qquad \text{(eq.5)}$$

$$\eta_k = \log \bar{a}_k - \tfrac{1}{2} v_k^2$$

$$\beta_k = \Delta t \; \dot{\bar{a}}_k / \bar{a}_k$$

$$\alpha_k = 1 + \beta_k \left( m e^{\eta_k} \phi'(e^{\eta_k}, u_k) / \phi(e^{\eta_k}, u_k) - 1 \right) \qquad (eq.6)$$

$$v_{k+1|k}^2 = \alpha_k^2 v_k^2 + 2\alpha_k \beta_k \gamma_k + \beta_k^2 \log(1 + \sigma_v^2) \qquad .$$

$$\gamma_{k+1} = \left( \alpha_k \gamma_k + \beta_k \log(1 + \sigma_v^2) \right) e^{-1/\tau}$$

$$k := k + 1 .$$

The quantity $x_{low}$ in (eq.5) is the constant

$$x_{low} = \eta_0 - 3 v_0 .$$

In (eq.6), $\phi'$ denotes the partial derivative $\partial \phi / \partial \alpha$ . The cumulative distribution corresponding to (eq.4) is

$$P(A(k\Delta t) \le a) \approx \frac{1}{2} \left[ 1 + \mathrm{erf}\left( \frac{\log a - \eta_k}{v_k \sqrt{2}} \right) \right] \qquad a \ge 0 \qquad (eq.7)$$

with the (standard) error function

$$\mathrm{erf}(x) = \frac{2}{\sqrt{\pi}} \int_0^x \exp(-t^2) \, dt .$$

From (eq.4) and (eq.7), any probabilistic statement about the actual fatigue can be evaluated. For instance, the probability that the true value of the system quantity $A(k \Delta t)$ lies within a given interval $[a_{min}, a_{max}]$ can be calculated. One possible summarizing display consists in a "monitoring curve" which represents the probability that the nominal lifetime has been reached, e.g., $P(A(t) > a_c)$. The acceptable probability level is chosen according to the risk aversion of the operator of the system.

In Fig.3 finally, a comparison between the present invention and an extensive Monte Carlo experiment representing a computationally complex alternative to the former is depicted. Twenty simulations of the Monte Carlo experiment are plotted, wherein the crack growth process was perturbed for each simulation by a different realization of the stochastic term. On the other hand, the approximate 95% probability interval obtained from the theoretical prediction (eq.7) is represented by the two bold dotted curves. If accurate, the probability interval should contain, *on average,* approximately 95% of the curves. As expected, the accuracy degrades as the crack size increases. The theoretical prediction is satisfactory for crack size below the critical size (horizontal dashed line).

In summary, the present invention is concerned with the estimation of an irreversible ageing quantity (as e.g. crack growth) in components subject to mechanical load. As the "consumed lifetime" of a specimen at a given time can be characterized in a valid manner only by an entire crack size distribution, the evolution of the latter is being monitored. In order to minimize the computational load, this is done by recursively updating the distribution of the ageing quantity (say crack size), taking into account the solution of a deterministic evolution. Preferably, a parametric approximation of the ageing quantity's distribution is evaluated, at the cost of a loss of accuracy. By means of a probabilistic approach, the invention overcomes the deterministic predictions underlying existing lifetime monitoring products, which ignore the empirically demonstrated significant scatter in experimental data. Again, the task of solving a partial differential equation for the searched (time-varying) distribution of the ageing quantity can be bypassed by the recursive parametric approximation of the distribution.

LIST OF DESIGNATIONS

1   differential equation solver
2   distribution updater
3   fatigue calculator

**Claims**

**1.** A method of estimating an irreversible ageing behaviour in a system, in particular crack growth in components subject to mechanical load, comprising the steps of

- introducing a monotonically increasing system quantity ($a$, $A$) representative of an ageing process,
- computing a deterministic evolution ($a(t)$) of the system quantity $(a)$,
- assuming an initial probability distribution ($p_{A|T}(\cdot|0)$) of the system quantity (A) at an initial time step ($k_0$),
- recursively estimating a probability distribution ($p_{A|T}(\cdot|k)$) of the system quantity ($A$) at a discrete time step ($k$)

based on an estimated probability distribution ($p_{A|T}(\cdot|k\text{-}1)$) and the deterministic evolution $(\overline{a}, \dot{\overline{a}})$ at a previous time step (k-1).

**2.** The method according to claim 1, **characterized in that** the estimation of a deterministic evolution of the system quantity (a) is an analytical or numerical solution ($a(t)$, $a_k$) of a deterministic differential equation (eq.1) for the system quantity.

**3.** The method according to claim 2, **characterized in that** the deterministic differential equation involves a predetermined, and in particular time-dependent, mechanical load signal ($u$).

**4.** The method according to claim 1, **characterized in that** the recursive estimation of the probability distribution $(p_{A|T}(\cdot|k))$ involves monotonicity constraints to account for irreversibility of ageing.

**5.** The method according to claim 1, **characterized in that** the initial and updated probability distribution, $(p_{A|T}(\cdot|0)$, $p_{A|T}(\cdot|k))$, are parametric distributions, in particular log-normal distributions.

**6.** The method according to claim 1, **characterized in that** the recursive estimation of the probability distribution $p_{A|T}(\cdot|k)$ takes into account stochasticity of the ageing process by introducing a stochastic term ($V(t)$).

**7.** The method according to claim 6, **characterized in that** the stochastic term $(V(t))$ represents a non-white noise.

**8.** The method according to claim 6, **characterized in that** the stochastic term ($V(t)$) is based on a parametric representation ($\sigma$, $\tau$).

**9.** The method according to claim 1, **characterized in that** a cumulative probability distribution ($P(A(k\Delta t)\leq a)$) is calculated at time step ($k$), and **in that** from a cumulative probability ($P(A(k\Delta t) \leq a_c)$) for a critical size ($a_c$) of the system quantity ($a$) an ageing or fatigue state of the system is evaluated.

**10.** The method according to claim 9, **characterized in that** a nominal lifetime of the system is considered to be reached at time step ($k$), if the cumulative probability ($P(A(k\Delta t)\leq a_c)$) for a critical size ($a_c$) of the system quantity $(a)$ exceeds a probability level set by an operator of the system.

**Patentansprüche**

**1.** Verfahren zum Schätzen eines irreversiblen Alterungsverhaltens in einem System, insbesondere eines Risswachstums in Komponenten, die einer mechanischen Belastung unterliegen, das die folgenden Schritte umfasst:

- Einführen einer monoton wachsenden Systemgröße ($a,A$), die einen Alterungsprozess repräsentiert,
- Berechnen einer deterministischen Entwicklung ($a(t)$) der Systemgröße ($a$),
- Annehmen einer anfänglichen Wahrscheinlichkeitsverteilung ($p_{A|T}(\cdot\,|0)$) der Systemgröße ($A$) in einem anfänglichen Zeitschritt ($k_0$),
- rekursives Schätzen einer Wahrscheinlichkeitsverteilung ($p_{A|T}(\cdot|k)$) der Systemgröße ($A$) in einem diskreten Zeitschritt ($k$) anhand einer geschätzten Wahrscheinlichkeitsverteilung ($p_{A|T}(\cdot|k$ - $1)$) und der deterministischen Entwicklung $(\overline{a}, \overset{\cdot}{a})$ in einem vorhergehenden Zeitschritt ($k$ - 1).

2. Verfahren nach Anspruch 1, **dadurch gekennzeichnet, dass** die Schätzung einer deterministischen Entwicklung der Systemgröße (a) eine analytische oder eine numerische Lösung ($a(t)$, $a_k$) einer deterministischen Differentialgleichung (G1. 1) für die Systemgröße ist.

3. Verfahren nach Anspruch 2, **dadurch gekennzeichnet, dass** die deterministische Differentialgleichung ein vorgegebenes und insbesondere ein zeitabhängiges Signal ($u$) für die mechanische Belastung zur Folge hat.

4. Verfahren nach Anspruch 1, **dadurch gekennzeichnet, dass** die rekursive Schätzung der Wahrscheinlichkeitsverteilung ($p_{A|T}(\cdot|k)$) Monotoniebeschränkungen aufweist, um die Irreversibilität der Alterung zu berücksichtigen.

5. Verfahren nach Anspruch 1, **dadurch gekennzeichnet, dass** die anfängliche und die aktualisierte Wahrscheinlichkeitsverteilung ($p_{A|T}(\cdot|0)$, $p_{A|T}(\cdot|k)$) parametrische Verteilungen, insbesondere logarithmische Normalverteilungen, sind.

6. Verfahren nach Anspruch 1, **dadurch gekennzeichnet, dass** die rekursive Schätzung der Wahrscheinlichkeitsverteilung ($p_{A|T}(\cdot\,|k)$) die Stochastik des Alterungsprozesses durch Einführen eines stochastischen Terms ($V(t)$) berücksichtigt.

7. Verfahren nach Anspruch 6, **dadurch gekennzeichnet, dass** der stochastische Term ($V(t)$) ein nicht weißes Rauschen repräsentiert.

8. Verfahren nach Anspruch 6, **dadurch gekennzeichnet, dass** der stochastische Term ($V(t)$) auf einer parametrischen Darstellung ($\sigma,\tau$) basiert.

9. Verfahren nach Anspruch 1, **dadurch gekennzeichnet, dass** eine kumulative Wahrscheinlichkeitsverteilung ($P(A(k\Delta t) \leq a)$) im Zeitschritt ($k$) berechnet wird und dass aus einer kumulativen Wahrscheinlichkeit ($P(A(k\Delta t) \leq a_C)$) für eine kritische Größe ($a_c$) der Systemgröße (a) ein Alterungs- oder Ermüdungszustand des Systems ermittelt wird.

10. Verfahren nach Anspruch 9, **dadurch gekennzeichnet, dass** davon ausgegangen wird, dass im Zeitschritt ($k$) eine Nennlebensdauer des Systems erreicht ist, falls die kumulative Wahrscheinlichkeit ($P(A(k\Delta t) \leq a_c)$) für eine kritische Größe ($a_c$) der Systemgröße ($a$) ein durch eine Bedienungsperson des Systems festgelegtes Wahrscheinlichkeitsniveau übersteigt.

**Revendications**

1. Procédé d'estimation d'un comportement de vieillissement irréversible dans un système, notamment la propagation de fissures dans des composants soumis à des charges mécaniques, comprenant les étapes de

- l'introduction d'une quantité ($a$, $A$) du système à croissance monotone, représentant un processus de vieillissement,
- le calcul d'une évolution déterministe ($a(t)$) de la quantité ($a$) du système,
- la supposition d'une distribution de probabilités initiale ($p_{A|T}(\cdot|0)$) de la quantité ($A$) du système à une étape de temps initiale ($k_0$),
- l'estimation récursive d'une distribution de probabilité ($p_{A|T}(\cdot|k)$) de la quantité ($A$) du système à une étape de temps discrète ($k$) basée sur une distribution de probabilité estimée ($p_{A|T}(\cdot|k$-$1)$) et l'évolution déterministe

$(\overline{a}, \dot{\overline{a}})$ à une étape de temps antérieure (k-1).

2. Procédé selon la revendication 1, **caractérisé en ce que** l'estimation d'une évolution déterministe de la quantité (a) du système est une solution analytique ou numérique ($a(t)$, $a_k$) d'une équation différentielle déterministe (éq. 1) de la quantité du système.

3. Procédé selon la revendication 2, **caractérisé en ce que** l'équation différentielle déterministe comporte un signal (u) de charge mécanique déterminé et notamment dépendant du temps.

4. Procédé selon la revendication 1, **caractérisé en ce que** l'estimation récursive de la distribution de probabilité ($p_{A|T}(\cdot|k)$) comporte des contraintes de monotonicité pour expliquer l'irréversibilité du vieillissement.

5. Procédé selon la revendication 1, **caractérisé en ce que** les distributions de probabilité initiale et actualisée ($p_{A|T}(\cdot|0)$), ($p_{A|T}(\cdot|k)$) sont des distributions paramétriques notamment des distributions log-normales.

6. Procédé selon la revendication 1, **caractérisé en ce que** l'estimation récursive de la distribution de probabilité ($p_{A|T}(\cdot|k)$) tient compte de stochasticité du processus du vieillissement en introduisant un terme stochastique ($V(t)$).

7. Procédé selon la revendication 6, **caractérisé en ce que** le terme stochastique ($V(t)$) représente un bruit non blanc.

8. Procédé selon la revendication 6, **caractérisé en ce que** le terme stochastique ($V(t)$) est basé sur une représentation paramétrique ($\sigma$, $\tau$).

9. Procédé selon la revendication 1, **caractérisé en ce que** la distribution de probabilité cumulative ($P(A(k\Delta t) \leq a)$) est calculée à l'étape de temps (k), et **en ce qu'**on évalue un état de vieillissement ou de fatigue du système à partir d'une probabilité cumulative ($P(A(k\Delta t) \leq a_c)$) pour une taille critique ($a_c$) de la quantité (a) du système

10. Procédé selon la revendication 9, **caractérisé en ce qu'**une durée de vie nominale du système est considérée comme atteinte à l'étape de temps (k) si la probabilité cumulative ($P(A(k\Delta t) \leq a_c)$) pour une taille critique ($a_c$) de la quantité (a) du système dépasse.un niveau de probabilité fixé par un opérateur du système.

## Fig. 1

**Fig. 2**

a)

b)

c)

d)

**Fig. 3**